# FASCICULE DE BREVET EUROPEEN

(11) **EP 1 775 815 B1**
(45) Date de publication et mention de la délivrance du brevet: **30.10.2013**
(21) Numéro de dépôt: 06291484.1
(22) Date de dépôt: 20.09.2006
(51) Int. Cl.: H02G 3/12

(54) **Boîtier encastrable à ancrage optimisé**
Einbaudose mit optimierter Befestigung
Flush-mounted box with optimal fixation

(30) Priorité: 12.10.2005 FR 0510424
(43) Date de publication de la demande: 18.04.2007
(73) Titulaire: Legrand France, 87000 Limoges (FR); Legrand SNC, 87000 Limoges (FR)
(72) Inventeur: Guitard, Julien, 87000 Limoges (FR); Mendez, Pascal, 87170 Isle (FR); Vergne, Raphaël, 87100 Limoges (FR)
(74) Mandataire: Novagraaf Technologies

(56) Documents cités:
- DE-A1- 19 922 212
- DE-U- 7 524 603

## Description

L'invention concerne, de façon générale, le domaine des appareillages électriques.

Plus précisément, l'invention concerne un boîtier encastrable comprenant un corps creux et au moins un dispositif de fixation réversible, le corps creux comprenant au moins une paroi latérale et présentant un axe central, un bord proximal et un bord distal, le dispositif de fixation étant adapté à maintenir sélectivement le corps creux encastré dans un logement, une fois inséré dans ce logement par son bord distal et suivant une première direction pointant vers le fond de ce logement, et comprenant au moins un organe d'ancrage et une vis dotée d'une tête et d'un fût fileté, la tête étant accessible de l'extérieur du logement et bloquée en translation suivant la première direction par le corps creux, le fût fileté étant engagé dans l'organe d'ancrage et s'étendant suivant la première direction, l'organe d'ancrage présentant un côté interne, tourné vers une face externe de la paroi latérale du corps creux, et un côté externe, tourné vers une face interne du logement, cet organe d'ancrage étant sélectivement déplacé dans le logement par serrage de la vis jusqu'à buter sur la face interne du logement et interdire l'extraction du corps creux hors du logement, la face externe de la paroi latérale présentant une rampe sur laquelle l'organe d'ancrage s'appuie par son côté interne pour une première plage de serrage de la vis, cette rampe prenant naissance au bord distal du corps creux et s'étendant vers le bord proximal en s'éloignant de l'axe central, et une extrémité distale de la vis, opposée à la tête, étant guidée suivant une direction sensiblement radiale par rapport à l'axe central du corps creux, le serrage de la vis provoquant ainsi une progression de l'organe d'ancrage le long de la rampe et un éloignement progressif de cet organe par rapport à l'axe central.

Des boîtiers de ce type sont bien connus et largement utilisés depuis des années, un tel boîtier étant par exemple décrit dans le modèle d'utilité allemand DE 75 24 603.

Néanmoins, l'évolution permanente des méthodes de construction se traduit par une diversité croissante des structures de parois dans lesquelles sont creusés les logements d'encastrement de ces boîtiers et, en fin de compte, par une difficulté de plus en plus marquée à couvrir tous les besoins existants au moyen des boîtiers connus.

Dans ce contexte, l'invention a pour but de proposer un boîtier doté d'une capacité d'ancrage supérieure à celle des boîtiers connus.

A cette fin, le boîtier encastrable de l'invention, par ailleurs conforme à la définition générique qu'en donne le préambule ci-dessus, est essentiellement caractérisé en ce que le corps creux comporte, à proximité de son bord distal, une butée radiale distante de la rampe suivant une direction radiale par rapport à l'axe central, en ce que la vis est bloquée en translation par le corps creux suivant une deuxième direction inverse de la première direction, en ce que l'organe d'ancrage présente, sur son côté interne, une surface en pente se rapprochant de l'axe central à proximité croissante du bord distal du corps creux, et en ce que la surface en pente de l'organe d'ancrage et la butée radiale du corps creux coopèrent, à la fin d'un desserrage complet de la vis, pour rapprocher l'organe d'ancrage de l'axe central et le plaquer contre la rampe, à distance minimale de l'axe central.

De préférence, la face externe de la paroi latérale présente une glissière s'étendant entre la rampe et le bord proximal du corps creux, suivant une direction sensiblement parallèle à l'axe central du corps creux, et sur laquelle l'organe d'ancrage s'appuie par son côté interne pour une deuxième plage de serrage de la vis.

Il est en outre possible de prévoir que le corps creux présente, à l'extérieur de sa paroi latérale et à proximité du bord distal, un voile s'étendant perpendiculairement à l'axe central et dans lequel est pratiquée une lumière, que cette lumière présente une forme allongée et s'étende suivant une direction radiale par rapport à l'axe central, et que l'extrémité distale de la vis soit engagée dans cette lumière, qui lui sert de guide.

Dans ce cas, la butée radiale peut avantageusement être portée par le voile.

Le côté externe de l'organe d'ancrage prend par exemple la forme d'une palette s'étendant suivant une direction sensiblement perpendiculaire à l'axe central.

L'organe d'ancrage peut, quant à lui, être constitué par un flan métallique découpé et plié.

L'organe d'ancrage peut alors facilement présenter une partie médiane sensiblement perpendiculaire au fût de la vis et traversée par ce fût, et deux oreilles latérales sensiblement perpendiculaires à la partie médiane et s'étendant en direction de l'axe central et du bord distal du corps creux.

Les oreilles latérales peuvent elles-mêmes présenter des parties arrondies disposées sur le côté interne de l'organe d'ancrage.

De préférence, le boîtier encastrable de l'invention comprend au moins deux dispositifs de fixation régulièrement répartis autour du corps creux.

Il est en outre judicieux de prévoir que la paroi latérale du corps creux présente, sur son bord proximal, un rebord périphérique propre à prendre appui sur le bord du logement, et que la palette de l'organe d'ancrage et le rebord du corps creux forment des mâchoires propres à enserrer, à la façon d'un étau, une couche d'un matériau dans lequel est pratiqué le logement.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective d'un boîtier encastrable conforme à l'invention, représenté dans une configuration dans laquelle l'organe d'ancrage est au bas de la rampe;
- la figure 2 est un détail agrandi du boîtier illustré à la figure 1 et représenté ici dans une configuration dans laquelle l'organe d'ancrage s'appuie sur la glissière;
- la figure 3 est une vue en coupe partielle agrandie du boîtier illustré à la figure 1;
- la figure 4 est une vue perspective partielle encore agrandie du boîtier illustré à la figure 1;
- la figure 5 est une vue en coupe partielle du boîtier illustré à la figure 2;
- la figure 6 est une vue en coupe partielle du boîtier illustré à la figure 1, représenté dans une configuration dans laquelle l'organe d'ancrage s'appuie sur la rampe;

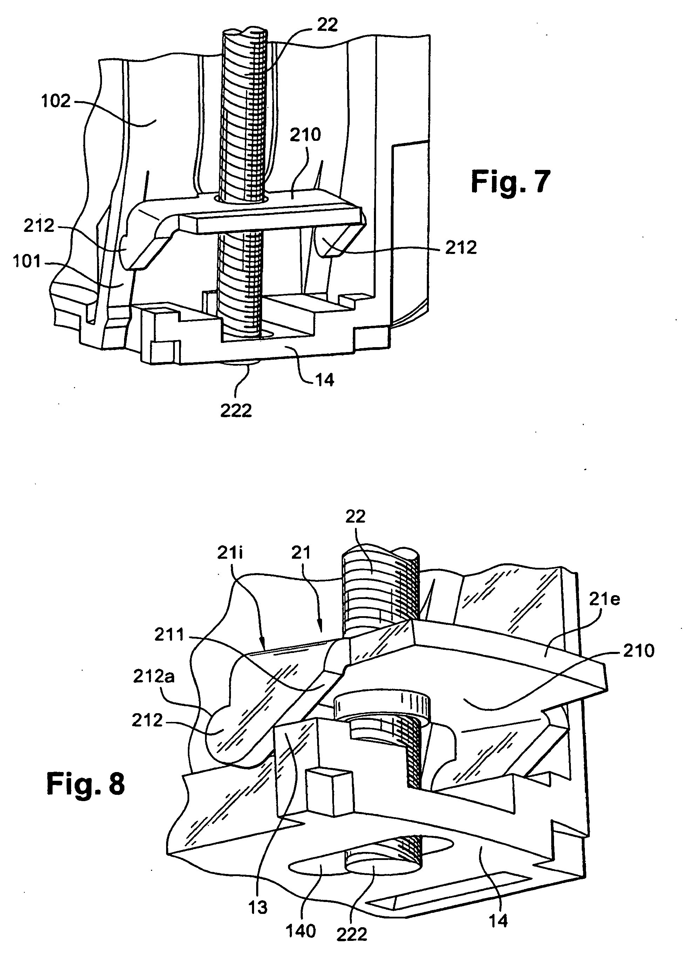

- les figures 7 et 8 sont des vues en perspective partielles du boîtier illustré à la figure 6, représenté dans deux positions respectives différentes de l'organe d'ancrage sur la rampe;
- la figure 9 est une autre vue perspective partielle du boîtier illustré à la figure 1; et
- la figure 10 est une vue en perspective partielle du boîtier illustré à la figure 1, représentant notamment la tête de la vis.

Comme annoncé précédemment, l'invention concerne un boîtier encastrable comprenant principalement un corps creux 1 et un ou plusieurs dispositifs 2 de fixation réversible permettant, une fois le corps creux 1 inséré dans un logement L, de le maintenir encastré dans ce logement par ancrage.

Par exemple, ce boîtier présente deux ou trois dispositifs de fixation 2 régulièrement répartis autour du corps creux 1.

Le corps creux 1 est essentiellement formé d'une paroi latérale 10 éventuellement fermée par un fond et présente un axe central X, un bord proximal 11, et un bord distal 12 par lequel ce corps 1 est inséré dans le logement L suivant une direction X1 pointant vers le fond de ce logement.

De préférence, la paroi latérale 10 du corps creux 1 présente également, sur son bord proximal 11, un rebord périphérique 110 propre à prendre appui sur le bord du logement L.

Chaque dispositif de fixation 2 comprend par exemple un organe d'ancrage 21 et une vis 22 dotée d'une tête 221 et d'un fût fileté 220.

La tête 221 de la vis 22 est accessible de l'extérieur du logement L et bloquée en translation suivant la direction X1 par le corps creux 1.

Le fût fileté 220 de la vis 22 est engagé dans l'organe d'ancrage 21 et s'étend suivant la direction X1.

Par ailleurs, l'organe d'ancrage 21 présente un côté interne 21i, qui est tourné vers la face externe 100 de la paroi latérale 10 du corps creux 1, et un côté externe 21e, qui est tourné vers la face interne Li du logement L.

Grâce à cet agencement, l'organe d'ancrage 21 peut être déplacé dans le logement L par serrage de la vis 22 jusqu'à buter sur la face interne Li du logement L, et interdire ainsi l'extraction du corps creux 1 hors du logement L.

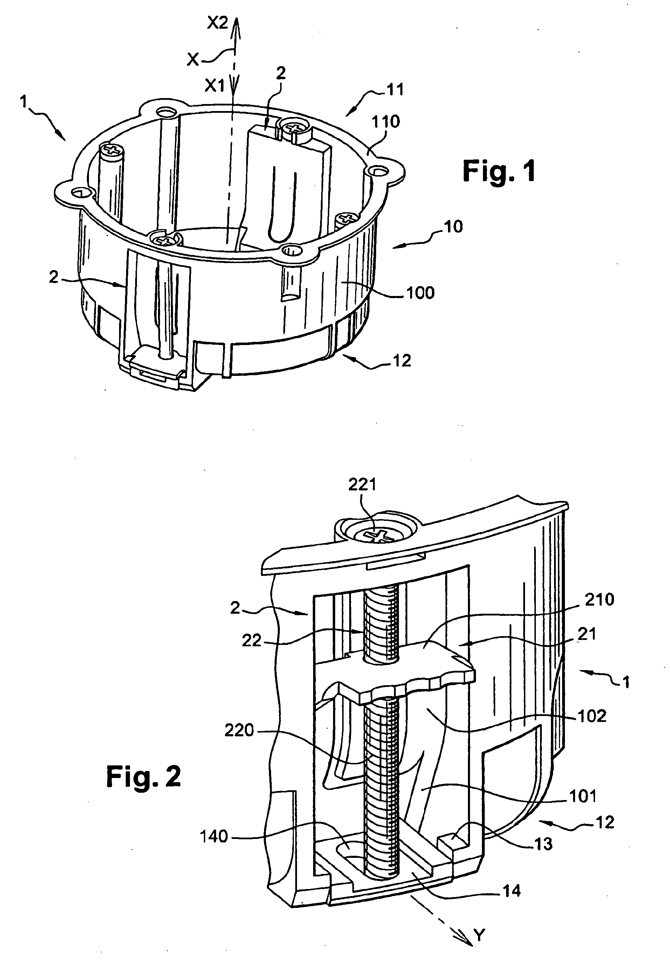

Selon l'invention, la face externe 100 de la paroi latérale 10 présente une rampe 101 sur laquelle l'organe d'ancrage 21 s'appuie par son côté interne 21i pour une première plage de serrage de la vis 22, l'organe d'ancrage étant initialement supposé adopter la position de repos notamment illustrée à la figure 1.

Comme le montre cette figure, la rampe 101 prend naissance au bord distal 12 du corps creux 1 et s'étend vers le bord proximal 11 en s'éloignant de l'axe central X.

Dans ces conditions, le serrage de la vis 22 provoque une progression de l'organe d'ancrage 21 le long de la rampe 101, depuis sa position de repos vers le bord proximal 11, et corrélativement un éloignement progressif de cet organe 21 par rapport à l'axe central X.

L'organe d'ancrage 21 est par exemple constitué par un flan métallique conformé, par découpe et pliage, de manière à présenter une partie médiane 210 et deux oreilles latérales 212.

La partie médiane 210 est traversée, suivant une direction sensiblement transversale, par le fût 220 de la vis 22.

Le côté externe 21e de l'organe d'ancrage 21 est défini sur cette partie médiane 210 et prend la forme d'une palette s'étendant suivant un plan sensiblement perpendiculaire à l'axe central X et au fût 220.

Les oreilles latérales 212, qui présentent des parties arrondies 212a disposées sur le côté interne 21i de l'organe d'ancrage 21, sont quant à elles sensiblement perpendiculaires à la partie médiane 210 et s'étendent approximativement en direction de l'axe central X et du bord distal 12 du corps creux 1.

La paroi latérale 10 présente, sur sa face externe 100, une glissière 102 contiguë à la rampe 101 et s'étendant entre cette rampe et le bord proximal 11 du corps creux 1, suivant une direction sensiblement parallèle à l'axe central X du corps creux 1.

Lorsque la vis 22 est serrée au-delà de la première plage de serrage, et atteint une deuxième plage de serrage contiguë de la première, les parties arrondies 212a des oreilles latérales 212 de l'organe d'ancrage 21 quittent la rampe 101 et s'appuient sur cette glissière 102.

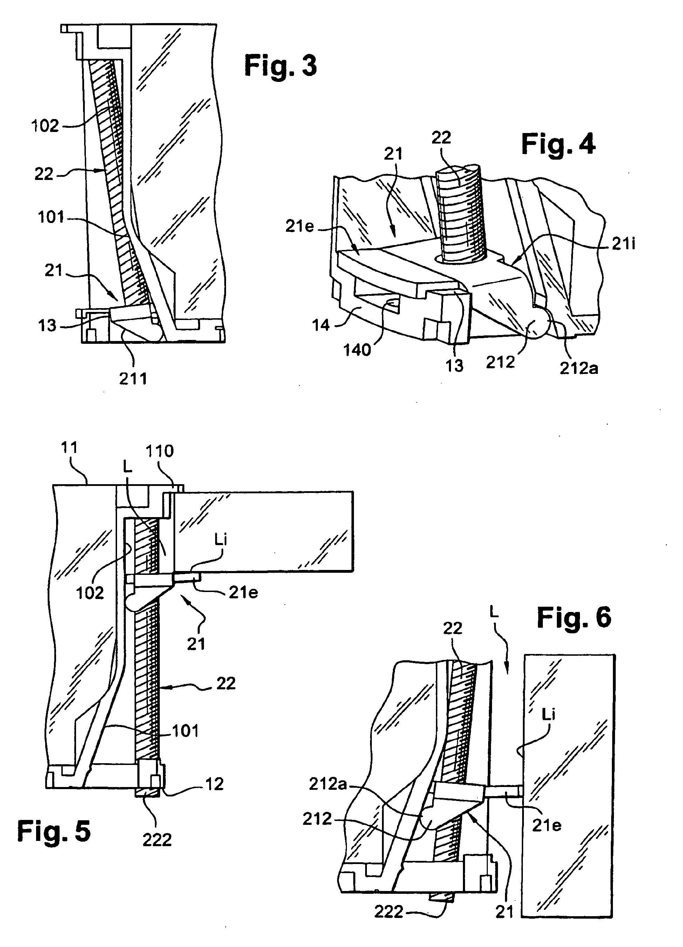

Dans le cas où le logement L est pratiqué dans une couche d'un matériau creux (figure 5), la palette 21e de l'organe d'ancrage 21 et le rebord 110 du corps creux 21, qui forment des mâchoires, enserrent alors la couche du matériau creux à la façon d'un étau à mesure que l'organe d'ancrage 21 progresse le long de la glissière 102.

Pour éviter tout mouvement incontrôlé de la vis 22, l'extrémité distale 222 de cette vis, c'est-à-dire l'extrémité opposée à la tête 221, est de préférence guidée suivant une direction sensiblement radiale Y par rapport à l'axe central X du corps creux 1.

Pour ce faire, le corps creux 1 présente par exemple, à l'extérieur de sa paroi latérale 10 et à proximité de son bord distal 12, un voile 14 s'étendant perpendiculairement à l'axe central X et dans lequel est pratiquée une lumière 140.

Cette lumière 140 présente une forme allongée suivant une direction radiale Y par rapport à l'axe central X et sert de guide à l'extrémité distale 222 de la vis 22 engagée dans cette lumière 140.

Pour permettre le replacement de l'organe d'ancrage dans sa position de repos notamment illustrée aux figures 3 et 4, le corps creux 1 peut comporter, à proximité de son bord distal 12, une butée radiale 13 portée par le voile 14 et distante de la rampe 101 suivant la direction radiale Y.

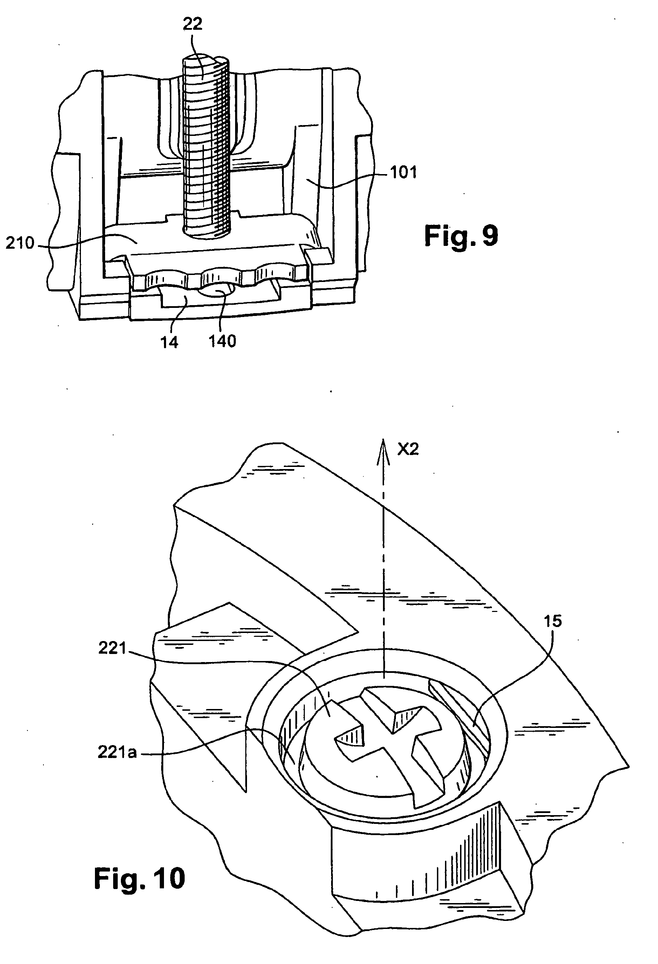

La vis 22 est bloquée en translation par le corps creux 1 suivant la direction X2 inverse de la direction d'insertion X1, par exemple au moyen d'une collerette 221a (figure 10) de la tête de vis 221 rendue prisonnière de nervures 15 du corps creux 1.

Par ailleurs, l'organe d'ancrage 21 présente, sur son côté interne 21i, une surface en pente 211 qui se rapproche de l'axe central X à proximité croissante du bord distal 12 du corps creux 1.

Lorsque la vis 22, après avoir été serrée, est ramenée vers une position de desserrage complet, la surface en pente 211 de l'organe d'ancrage 21 et la butée radiale 13 du corps creux 1 viennent en contact l'une avec l'autre et coopèrent pour rapprocher l'organe d'ancrage 21 de l'axe central X et le plaquer contre la rampe 101, à distance minimale de l'axe central X.

Après avoir été encastré et ancré dans un logement L, un boîtier conforme à l'invention peut ainsi être facilement libéré, extrait du logement L, et éventuellement même être réutilisé.

## Revendications

1. Boîtier encastrable comprenant un corps creux (1) et au moins un dispositif (2) de fixation réversible, le corps creux (1) comprenant au moins une paroi latérale (10) et présentant un axe central (X), un bord proximal (11) et un bord distal (12), le dispositif de fixation (2) étant adapté à maintenir sélectivement le corps creux (1) encastré dans un logement (L), une fois inséré dans ce logement par son bord distal (12) et suivant une première direction (X1) pointant vers le fond de ce logement (L), et comprenant au moins un organe d'ancrage (21) et une vis (22) dotée d'une tête (221) et d'un fût fileté (220), la tête (221) étant accessible de l'extérieur du logement (L) et bloquée en translation suivant la première direction (X1) par le corps creux (1), le fût fileté (220) étant engagé dans l'organe d'ancrage (21) et s'étendant suivant la première direction (X1), l'organe d'ancrage (21) présentant un côté interne (21i), tourné vers une face externe (100) de la paroi latérale (10) du corps creux (1), et un côté externe (21e), tourné vers une face interne (Li) du logement (L), cet organe d'ancrage (21) étant sélectivement déplacé dans le logement (L) par serrage de la vis (22) jusqu'à buter sur la face interne (Li) du logement (L) et interdire l'extraction du corps creux (1) hors du logement (L), la face externe (100) de la paroi latérale (10) présentant une rampe (101) sur laquelle l'organe d'ancrage (21) s'appuie par son côté interne (21i) pour une première plage de serrage de la vis (22), cette rampe (101) prenant naissance au bord distal (12) du corps creux (1) et s'étendant vers le bord proximal (11) en s'éloignant de l'axe central (X), et une extrémité distale (222) de la vis (22), opposée à la tête (221), étant guidée suivant une direction sensiblement radiale (Y) par rapport à l'axe central (X) du corps creux (1), le serrage de la vis (22) provoquant ainsi une progression de l'organe d'ancrage (21) le long de la rampe (101) et un éloignement progressif de cet organe (21) par rapport à l'axe central (X), **caractérisé en ce que** le corps creux (1) comporte, à proximité de son bord distal (12), une butée radiale (13) distante de la rampe (101) suivant une direction radiale (Y) par rapport à l'axe central (X), **en ce que** la vis (22) est bloquée en translation par le corps creux (1) suivant une deuxième direction (X2) inverse de la première direction (X1), **en ce que** l'organe d'ancrage (21) présente, sur son côté interne (21i), une surface en pente (211) se rapprochant de l'axe central (X) à proximité croissante du bord distal (12) du corps creux (1), et **en ce que** la surface en pente (211) de l'organe d'ancrage (21) et la butée radiale (13) du corps creux (1) coopèrent, à la fin d'un desserrage complet de la vis (22), pour rapprocher l'organe d'ancrage (21) de l'axe central (X) et le plaquer contre la rampe (101), à distance minimale de l'axe central (X).

2. Boîtier encastrable suivant la revendication 1, **caractérisé en ce que** la face externe (100) de la paroi latérale (10) présente une glissière (102) s'étendant entre la rampe (101) et le bord proximal (11) du corps creux (1), suivant une direction sensiblement parallèle à l'axe central (X) du corps creux (1), et sur laquelle l'organe d'ancrage (21) s'appuie par son côté interne (21i) pour une deuxième plage de serrage de la vis (22).

3. Boîtier encastrable suivant l'une quelconque des revendications précédentes, **caractérisé en ce que** le corps creux (1) présente, à l'extérieur de sa paroi latérale (10) et à proximité du bord distal (12), un voile (14) s'étendant perpendiculairement à l'axe central (X) et dans lequel est pratiquée une lumière (140), **en ce que** cette lumière (140) présente une forme allongée et s'étend suivant une direction radiale (Y) par rapport à l'axe central (X), et **en ce que** l'extrémité distale (222) de la vis (22) est engagée dans cette lumière (140), qui lui sert de guide.

4. Boîtier encastrable suivant la revendication 3, **caractérisé en ce que** la butée radiale (13) est portée par le voile (14).

5. Boîtier encastrable suivant l'une quelconque des revendications précédentes, **caractérisé en ce que** le côté externe (21e) de l'organe d'ancrage (21) prend la forme d'une palette s'étendant suivant une direction sensiblement perpendiculaire à l'axe central (X).

6. Boîtier encastrable suivant l'une quelconque des revendications précédentes, **caractérisé en ce que** l'organe d'ancrage (21) est constitué par un flan métallique découpé et plié.

7. Boîtier encastrable suivant la revendication 6, **caractérisé en ce que** l'organe d'ancrage (21) présente une partie médiane (210) sensiblement perpendiculaire au fût (220) de la vis (22) et traversée par ce fût (220), et deux oreilles latérales (212) sensiblement perpendiculaires à la partie médiane (210) et s'étendant en direction de l'axe central (X) et du bord distal (12) du corps creux (1).

8. Boîtier encastrable suivant la revendication 7, **caractérisé en ce que** les oreilles latérales (212) présentent des parties arrondies (212a) disposées sur le côté interne (21i) de l'organe d'ancrage (21).

9. Boîtier encastrable suivant l'une quelconque des revendications précédentes, **caractérisé en ce qu'**il comprend au moins deux dispositifs de fixation (2) régulièrement répartis autour du corps creux (1).

10. Boîtier encastrable suivant l'une quelconque des revendications précédentes combinée à la revendication 5, **caractérisé en ce que** la paroi latérale (10) du corps creux (1) présente, sur son bord proximal (11), un rebord périphérique (110) propre à prendre appui sur le bord du logement (L), et **en ce que** la palette (21e) de l'organe d'ancrage (21) et le rebord (110) du corps creux (1) forment des mâchoires propres à enserrer, à la façon d'un étau, une couche d'un matériau dans lequel est pratiqué le logement (L).

## Patentansprüche

1. Einbaubares Gehäuse, das einen Hohlkörper (1) und mindestens eine Vorrichtung (2) zur umkehrbaren Befestigung enthält, wobei der Hohlkörper (1) mindestens eine Seitenwand (10) enthält und eine Mittelachse (X), einen proximalen Rand (11) und einen distalen Rand (12) hat, wobei die Befestigungsvorrichtung (2) geeignet ist, um selektiv den Hohlkörper (1) in einer Aufnahme (L) eingebaut zu halten, wenn er über seinen distalen Rand (12) und gemäß einer zum Boden dieser Aufnahme (L) weisenden ersten Richtung (X1) in diese Aufnahme eingefügt ist, und mindestens ein Verankerungselement (21) und eine Schraube (22) enthält, die mit einem Kopf (221) und mit einem Gewindeschaft (220) versehen ist, wobei der Kopf (221) von außerhalb der Aufnahme (L) zugänglich ist und in Translationsverschiebung gemäß der ersten Richtung (X1) vom Hohlkörper (1) blockiert wird, wobei der Gewindeschaft (220) in das Verankerungselement (21) eingeführt ist und sich gemäß der ersten Richtung (X1) erstreckt, wobei das Verankerungselement (21) eine Innenseite (21i), die zu einer Außenseite (100) der Seitenwand (10) des Hohlkörpers (1) weist, und eine Außenseite (21e) hat, die zu einer Innenseite (Li) der Aufnahme (L) weist, wobei dieses Verankerungselement (21) durch Anziehen der Schraube (22) selektiv in der Aufnahme (L) verschoben wird, bis es auf der Innenseite (Li) der Aufnahme (L) anschlägt und das Herausziehen des Hohlkörpers (1) aus der Aufnahme (L) verhindert, wobei die Außenseite (100) der Seitenwand (10) eine Rampe (101) hat, auf die das Verankerungselement (21) sich mit seiner Innenseite (21i) für einen ersten Anziehbereich der Schraube (22) auflegt, wobei diese Rampe (101) am distalen Rand (12) des Hohlkörpers (1) beginnt und sich bis zum proximalen Rand (11) erstreckt, indem sie sich von der Mittelachse (X) entfernt, und ein distales Ende (222) der Schraube (22) entgegengesetzt zum Kopf (221) in einer im Wesentlichen radialen Richtung (Y) bezüglich der Mittelachse (X) des Hohlkörpers (1) geführt wird, wobei das Anziehen der Schraube (22) so eine Vorwärtsbewegung des Verankerungselements (21) entlang der Rampe (101) und eine progressive Entfernung dieses Elements (21) bezüglich der Mittelachse (X) bewirkt, **dadurch gekennzeichnet, dass** der Hohlkörper (1) in der Nähe seines distalen Rands (12) einen radialen Anschlag (13) entfernt von der Rampe (101) gemäß einer radialen Richtung (Y) bezüglich der Mittelachse (X) aufweist, dass die Schraube (22) in Translationsbewegung gemäß einer zweiten Richtung (X2) entgegengesetzt zur ersten Richtung (X1) vom Hohlkörper (1) blockiert wird, dass das Verankerungselement (21) auf seiner Innenseite (21i) eine geneigte Fläche (211) hat, die sich der Mittelachse (X) in zunehmender Nähe zum distalen Rand (12) des Hohlkörpers (1) annähert, und dass die geneigte Fläche (211) des Verankerungselements (21) und der radiale Anschlag (13) des Hohlkörper (1) am Ende eines vollständigen Losschraubens der Schraube (22) zusammenwirken, um das Verankerungselement (21) der Mittelachse (X) anzunähern und es gegen die Rampe (101) in einem minimalen Abstand zur Mittelachse (X) anzudrücken.

2. Einbaubares Gehäuse nach Anspruch 1, **dadurch gekennzeichnet, dass** die Außenseite (100) der Seitenwand (10) eine Gleitschiene (102) hat, die sich zwischen der Rampe (101) und dem proximalen Rand (11) des Hohlkörpers (1) gemäß einer Richtung im Wesentlichen parallel zur Mittelachse (X) des Hohlkörpers (1) erstreckt, und auf die das Verankerungselement (21) sich über seine Innenseite (21i) für einen zweiten Anziehbereich der Schraube (22) auflegt.

3. Einbaubares Gehäuse nach einem der vorhergehenden Ansprüche, **dadurch gekennzeichnet, dass** der Hohlkörper (1) außerhalb seiner Seitenwand (10) und in der Nähe des distalen Rands (12) eine Abdeckung (14) hat, die sich lotrecht zur Mittelachse (X) erstreckt und in der eine Öffnung (140) ausgeführt ist, dass diese Öffnung (140) eine längliche Form hat und sich gemäß einer radialen Richtung (Y) bezüglich der Mittelachse (X) erstreckt, und dass das distale Ende (222) der Schraube (22) in diese Öffnung (140) eingeführt wird, die ihm als Führung dient.

4. Einbaubares Gehäuse nach Anspruch 3, **dadurch gekennzeichnet, dass** der radiale Anschlag (13) von der Abdeckung (14) getragen wird.

5. Einbaubares Gehäuse nach einem der vorhergehenden Ansprüche, **dadurch gekennzeichnet, dass** die Außenseite (21e) des Verankerungselements (21) die Form einer Platte annimmt, die sich in einer Richtung im Wesentlichen lotrecht zur Mittelachse (X) erstreckt.

6. Einbaubares Gehäuse nach einem der vorhergehenden Ansprüche, **dadurch gekennzeichnet, dass** das Verankerungselement (21) aus einem ausgeschnittenen und gefalteten Metallblech besteht.

7. Einbaubares Gehäuse nach Anspruch 6, **dadurch gekennzeichnet, dass** das Verankerungselement (21) einen Mittelbereich (21'0) im Wesentlichen lotrecht zum Schaft (220) der Schraube (22) und von diesem Schaft (220) durchquert und zwei seitliche Lappen (212) im Wesentlichen lotrecht zum Mittelbereich (210) und sich in Richtung der Mittelachse (X) und des distalen Rands (12) des Hohlkörpers (1) erstreckend besitzt.

8. Einbaubares Gehäuse nach Anspruch 7, **dadurch gekennzeichnet, dass** die seitlichen Lappen (212) abgerundete Bereiche (212a) haben, die auf der Innenseite (21i) des Verankerungselements (21) angeordnet sind.

9. Einbaubares Gehäuse nach einem der vorhergehenden Ansprüche, **dadurch gekennzeichnet, dass** es mindestens zwei Befestigungsvorrichtungen (2) enthält, die gleichmäßig um den Hohlkörper (1) verteilt sind.

10. Einbaubares Gehäuse nach einem der vorhergehenden Ansprüche kombiniert mit Anspruch 5, **dadurch gekennzeichnet, dass** die Seitenwand (10) des Hohlkörpers (1) auf ihrem proximalen Rand (11) eine Umfangsrandleiste (110) besitzt, die auf dem Rand der Aufnahme (L) aufliegen kann, und dass die Platte (21e) des Verankerungselements (21) und die Randleiste (110) des Hohlkörpers (1) Klemmbacken formen, die nach Art eines Schraubstocks eine Schicht eines Materials einklemmen können, in dem die Aufnahme (L) ausgeführt ist.

## Claims

1. Flush-mountable box comprising a hollow body (1) and at least one reversible fixing device (2), the hollow body (1) comprising at least one lateral wall (10) and having a central axis (X), a proximal edge (11) and a distal edge (12), the fixing device (2) being designed to selectively hold the hollow body (1) flush-mounted in a recess (L), once inserted into this recess by its distal edge (12) and in a first direction (X1) pointing towards the bottom of this recess (L), and comprising at least one fastening member (21) and one screw (22) provided with a head (221) and a threaded stock (220), the head (221) being accessible from outside the recess (L) and immobilized in translation in the first direction (X1) by the hollow body (1), the threaded stock (220) being engaged in the fastening member (21) and extending in the first direction (X1), the fastening member (21) having an inner side (21i), facing towards an outer face (100) of the lateral wall (10) of the hollow body (1), and an outer side (21e), facing towards an inner face (Li) of the recess (L), this fastening member (21) being selectively displaced in the recess (L) by tightening the screw (22) until it abuts on the inner face (Li) of the recess (L) and prevents the extraction of the hollow body (1) from the recess (L), the outer face (100) of the lateral wall (10) having a ramp (101) on which the fastening member (21) bears by its inner side (21i) for a first range of tightening of the screw (22), this ramp (101) giving birth to the distal edge (12) of the hollow body (1) and extending towards the proximal edge (11) away from the central axis (X), and a distal end (222) of the screw (22), opposite to the head (221), being guided in a substantially radial direction (Y) relative to the central axis (X) of the hollow body (1), the tightening of the screw (22) thus resulting in a progression of the fastening member (21) along the ramp (101) and progressive distancing of this member (21) from the central axis (X), **characterized in that** the hollow body (1) comprises, in proximity to its distal edge (12), a radial abutment (13) away from the ramp (101) in a radial direction (Y) relative to the central axis (X), **in that** the screw (22) is immobilized in translation by the hollow body (1) in a second direction (X2) that is the reverse of the first direction (X1), **in that** the fastening member (21) has, on its inner side (21i), a sloping surface (211) converging towards the central axis (X) in increasing proximity to the distal edge (12) of the hollow body (1), and **in that** the sloping surface (211) of the fastening member (21) and the radial abutment (13) of the hollow body (1) cooperate, at the end of a complete loosening of the screw (22), to bring the fastening member (21) towards the central axis (X) and press it against the ramp (101), at a minimum distance from the central axis (X).

2. Flush-mountable box according to Claim 1, **characterized in that** the outer face (100) of the lateral wall (10) has a guideway (102) extending between the ramp (101) and the proximal edge (11) of the hollow body (1), in a direction substantially parallel to the central axis (X) of the hollow body (1), and on which the fastening member (21) bears by its inner side (21i) for a second range of tightening of the screw (22).

3. Flush-mountable box according to any one of the preceding claims, **characterized in that** the hollow body (1) has, outside its lateral wall (10) and in proximity to the distal edge (12), a web (14) extending at right angles to the central axis (X) and in which is formed an opening (140), **in that** this opening (140) has an elongate form and extends in a radial direction (Y) relative to the central axis (X), and **in that** the distal end (222) of the screw (22) is engaged in this opening (140), which serves as a guide for it.

4. Flush-mountable box according to Claim 3, **characterized in that** the radial abutment (13) is borne by the web (14).

5. Flush-mountable box according to any one of the preceding claims, **characterized in that** the outer side (21e) of the fastening member (21) is in the form of a tab extending in a direction substantially at right angles to the central axis (X).

6. Flush-mountable box according to any one of the preceding claims, **characterized in that** the fastening member (21) consists of a cut and folded metal blank.

7. Flush-mountable box according to Claim 6, **characterized in that** the fastening member (21) has a median portion (210) substantially at right angles to the stock (220) of the screw (22) and passed by this stock (220), and two lateral ears (212) substantially at right angles to the median portion (210) and extending towards the central axis (X) and the distal edge (12) of the hollow body (1).

8. Flush-mountable box according to Claim 7, **characterized in that** the lateral ears (212) have rounded portions (212a) arranged on the inner side (21i) of the fastening member (21).

9. Flush-mountable box according to any one of the preceding claims, **characterized in that** it comprises at least two fixing devices (2) evenly distributed around the hollow body (1).

10. Flush-mountable box according to any one of the preceding claims in combination with Claim 5, **characterized in that** the lateral wall (10) of the hollow body (1) has, on its proximal edge (11), a peripheral flange (110) specifically for bearing on the edge of the recess (L), and **in that** the tab (21e) of the fastening member (21) and the flange (110) of the hollow body (1) form jaws designed to grip, in the manner of a vice, a layer of a material in which the recess (L) is formed.
